# EUROPÄISCHE PATENTSCHRIFT

(11) **EP 0 474 198 B1**
(45) Veröffentlichungstag und Bekanntmachung des Hinweises auf die Patenterteilung: **29.11.1995**
(21) Anmeldenummer: 91114861.7
(22) Anmeldetag: 03.09.1991
(51) Int. Cl.: F23L 7/00, F23G 5/14, F23L 1/02, F23L 9/00

(54) **Verbrennungsverfahren**
Combustion method
Procédé de combustion

(30) Priorität: 03.09.1990 DE 4027908
(43) Veröffentlichungstag der Anmeldung: 11.03.1992
(73) Patentinhaber: Linde Aktiengesellschaft, 65189 Wiesbaden (DE); MARTIN GmbH, D-80807 München (DE)
(72) Erfinder: Berger, Michael, Dr. rer. nat., W-8023 Pullach (DE); Martin, Johannes, J.E., Dipl.-Ing., W-8124 Seeshaupt (DE); Horn, Joachim, Dipl.-Ing., W-8000 München 18 (DE); Zahlten, Michael J., Dipl.-Ing., W-2000 Hamburg 65 (DE)
(74) Vertreter: Zmyj, Erwin, Dipl.-Ing., Dipl.-Wirtsch.-Ing.

(56) Entgegenhaltungen:
- EP-A- 0 012 091
- WO-A-86/06151
- DE-A- 2 404 484
- DE-A- 3 915 992
- US-A- 3 699 903
- PATENT ABSTRACTS OF JAPAN vol. 13, no. 237 (M-833)(3585) 5. Juni 1989 & JP-A-1 049 811 (KUBOTA) 27. Februar 1989

## Beschreibung

Die Erfindung betrifft ein Verbrennungsverfahren, bei dem Brennstoff auf einem Feuerungsrost kontinuierlich zugeführt, unter Zufuhr von Primärverbrennungsluft verbrannt und mit fortschreitender Verbrennung weiterbefördert wird, und bei dem oberhalb des Feuerungsrostes das Abgas unter Zuführung von Sekundärverbrennungsluft verbrannt wird, wobei die Verbrennungsluft sowohl hinsichtlich der Menge als auch hinsichtlich Ihrer Zusammensetzung in Abhängigkeit vom Verbrennungsort und der Verbrennungsintensität variiert wird.

Bei einem aus der WO-A-8 606 151 bekannten Verfahren wird auf einem Feuerungsrost die Verbrennungsluft in einer solchen Menge zugeführt, daß die Verbrennung in der ersten Hälfte der Verbrennungsstrecke bei stöchiometrischen Verhältnissen abläuft, so daß Schwelgas und andere noch nicht verbrannte Anteile entstehen, die dann im Rauchgas im Bereich der zweiten Hälfte des Verbrennungsrostes durch gezielte Zuführung von Sauerstoff in das Rauchgas bei sehr hohen Temperaturen verbrannt werden, um hierdurch das Entstehen von Dioxinen zu vermeiden bzw. bereits entstandene Dioxine abzubauen. Außerdem wird in der Ausbrandzone unter den Feuerungsrost zusätzlich zu der üblichen aus Umgebungsluft bestehenden Verbrennungsluft mittels Lanzen reiner Sauerstoff in geringerer Menge zugeführt, um einen vollständigen Ausbrand zu erzielen. Die Verbrennung verläuft also in der ersten Hälfte des Verbrennungsrostes in stark gedämpfter Form, wobei im zweiten Teil des Verbrennungsrostes die unverbrannten Teile nachverbrannt werden, d.h. die Unvollständigkeit der Verbrennung in der ersten Hälfte des Feuerungsrostes wird durch reine Sauerstoffzugabe im zweiten Teil des Feuerungsrostes nachgeholt.

Bei diesem bekannten Verfahren besteht die Gefahr, daß die unvollkommene Verbrennung in der ersten Hälfte des Verbrennungsrostes in der zweiten Hälfte des Verbrennungsrostes, wo die Verbrennung im wesentlichen im Sekundärluftbereich stattfindet, nicht vollständig ausgeglichen werden kann, bzw. daß unter Umständen überflüssiger Sauerstoff vorhanden ist, der sich mit den nicht vollständig verbrannten Abgasen vermischt, was zu einer unkontrollierten Weiterverbrennung führt. Außerdem besteht auch die Gefahr, daß durch die unvollkommene Verbrennung in der ersten Hälfte des Feuerungsrostes große Anteile unverbrannten Materials in der Schlacke eingeschlossen werden, was zu einem unvollständigen Ausbrand der Schlacke führt.

Aufgabe der Erfindung ist es, ein wirtschaftliches Verfahren der eingangs genannten Art zur Verfügung zu stellen, bei dem die Kontrolle des Verbrennungsablaufes verbessert ist und die Schadgasemission vermindert wird.

Diese Aufgabe wird durch die im Anspruch 1 angegebenen Merkmale gelöst, die eine bessere Kontrolle des Verbrennungsablaufes bei reduziertem Rauchgasvolumensstrom und eine Verbesserung des Ausbrandes in der Schlacke und im Rauchgas ermöglichen.

Der erfindungswesentliche Gedanke besteht also darin, die Primärverbrennungsluft und/oder Sekundärverbrennungsluft mit gegenüber der Umgebungsluft erhöhter Sauerstoffkonzentration allen Phasen des Verbrennungsprozesses zuzuführen, die Primärverbrennungsluft und/oder Sekundärverbrennungsluft mit erhöhtem Sauerstoffanteil entsprechend den tatsächlichen Erfordernissen des Verbrennungsprozessen benötigen, und in denjenigen Phasen des Verbrennungsprozesses, in denen ein gegenüber dem Anteil an Sauerstoff in Umgebungsluft niedrigerer Sauerstoffbedarf besteht, die Primärverbrennungsluft und/oder Sekundärverbrennungsluft mit einem inerten Gas oder Gasgemisch zu vermischen. Letztere Maßnahme ist deshalb besonders vorteilhaft, weil eine Verringerung der Sauerstoffmenge nicht etwa einfach nur durch Drosselung der Zufuhr von Primärverbrennungsluft und/oder Sekundärverbrennungsluft zu erreichen ist. In bestimmten Prozeßphasen ist nämlich beispielsweise zu Kühlzwecken ein bestimmter Mindest-Gasvolumenstrom erforderlich. Erfindungsgemäß soll sich in der aus einer Mischung von inertem Gas und Umgebungsluft bestehenden Primärverbrennungsluft und/oder Sekundärverbrennungsluft gerade noch annähernd soviel Sauerstoff befinden, daß der in diesen Phasen des Verbrennungsprozesses verringerte Sauerstoffbedarf gedeckt wird. Dadurch wird verhindert, daß sich ungenutzter, überschüssiger Sauerstoff aus diesen Phasen mit den heißen Abgasen mischt und in einer unkontrollierten Sekundärverbrennung weiterreagiert. Durch diese Maßnahme ist trotz verringertem Sauerstoffgehalt der Primärverbrennungsluft und/oder Sekundärverbrennungsluft ein ausreichender Gasvolumensstrom vorhanden, der zu anderen als Verbrennungszwecken erforderlich ist.

Durch die im Anspruch 2 angegebene Definition der Sauerstoffmenge ist sichergestellt, daß beispielsweise die gesetzlich vorgeschriebene Restsauerstoffmenge im Abgas nicht unterschritten wird.

Gemäß einer zweckmäßigen Ausgestaltung der Erfindung wird als inertes Gas Stickstoff verwendet. In diesem Fall ist es günstig, wenn der Sauerstoff und der Stickstoff in einer Luftzerlegungsanlage gewonnen wird. Die Luftzerlegungsanlage stellt damit sämtliche zum Verfahren benötigte Gase, nämlich Sauerstoff und das inerte Gas bzw. Gasgemisch zur Verfügung. Reststoffe aus der Luftzerlegung, wie bei der reinen Sauerstoffverbrennung, bei der wie eingangs erwähnt lediglich generell alle Phasen des Verbrennungsverfahrens durch Luftzerlegung erzeugter Sauerstoff zusätzlich zugeführt wird, und bei der somit Stickstoff und die weiteren in der Umgebungsluft enthaltenen Gase ungenutzt bleiben, entstehen dann nämlich nicht. Es erweist sich als vorteilhaft, bei einem Verfahren, bei dem der Brennstoff kontinuierlich einer Verbrennungsanlage zugeführt und dort durch eine Verbrennungszone und eine daran anschließende Ausbrandzone transportiert wird, in der Verbrennungszone die Primärverbrennungsluft mit erhöhtem Sauerstoffanteil über demjenigen der Umgebungsluft und in der Ausbrandzone die Primärverbrennungsluft mit verringertem Sauerstoffanteil unter demjenigen der Umgebungsluft zuzuführen. Dabei ist der Sauerstoffanteil jeweils so bemessen, daß eine gute Verbrennung und ein guter Ausbrand erzielt sowie eine beispielsweise gesetzlich vorgeschriebene Restsauerstoffmenge im Abgas nicht überschritten wird. Während der Sauerstoffanteil in der Verbrennungszone aus den genannten Gründen möglichst hoch sein soll (es ist hier sogar möglich, annähernd reinen Sauerstoff als Primärverbrennungsluft vorzusehen), hat es sich in Versuchen gezeigt, daß in der Ausbrandzone, in der lediglich ein Restausbrand stattfindet, nur noch ein Sauerstoffbedarf vorhanden ist, der weit geringer ist, als der Sauerstoffgehalt der Umgebungsluft, und ein möglicher Sauerstoffüberschuß zu unkontrollierten Verbrennungen im Abgasstrom und damit zu einer unkontrollierten Schadstoffbildung führt.

Da es nicht ohne weiteres möglich ist, den Sauerstoffanteil in der Umgebungsluft zu verringern, erfolgt die Verringerung des Sauerstoffanteils der Primärverbrennungsluft für die Ausbrandzone durch "Verdünnen" der Umgebungsluft mittels Zugabe eines inerten Gases bzw. Gasgemisches.

Eine besonders günstige Ausgestaltung der Erfindung wird bei einem Verfahren, bei dem das Abgas einer Sekundärverbrennung unter Zufuhr von Verbrennungsluft unterzogen wird, darin gesehen, den Abgasen Verbrennungsluft mit erhöhtem Sauerstoffanteil zuzuführen. Dies ist insbesondere dann wichtig, wenn sich im Abgas aus der Verbrennungszone kein Sauerstoff mehr befindet.

Ist hingegen zur Sekundärverbrennung noch eine ausreichende Menge an Sauerstoff im Abgas vorhanden, so wird vorgeschlagen, dem Abgas Verbrennungsluft mit verringertem Sauerstoffanteil zuzuführen und so lediglich für eine gute Durchmischung der Abgaskomponenten zu sorgen, was ebenfalls die Sekundärverbrennung, d.h. die Reaktion der Komponenten miteinander ermöglicht.

Gemäß einer Ausgestaltung können die vorteilhaften Maßnahmen kombiniert werden, nämlich dadurch, daß in denjenigen Bereichen des Abgasstromes, in denen eine zur Sekundärverbrennung unzureichende Menge an Sauerstoff vorhanden ist, Verbrennungsluft mit erhöhtem Sauerstoffanteil zugeführt wird und daß in denjenigen Bereichen des Abgasstromes, in denen eine inhomogene Abgaszusammensetzung vorliegt und eine zur Sekundärverbrennung ausreichende Menge an Sauerstoff vorhanden ist, Verbrennungsluft mit verringertem Sauerstoffanteil zugeführt wird.

In Weiterbildung der Erfindung wird vorgeschlagen, den Anteil von Sauerstoff bzw. Stickstoff in der Primär- und/oder Sekundärverbrennungsluft und/oder die Menge an Primär- und/oder Sekundärverbrennungsluft in Abhängigkeit von der Verbrennungsintensität zu regeln. Die Verbrennungsintensität kann z.B. durch Infrarotkameras oder kontinuierliche Temperaturnetzmessung mittels Thermoelementen erfolgen.

Das beschriebene Verbrennungsverfahren erweist sich insbesondere für die thermische Abfallbehandlung als vorzüglich geeignet.

Weitere Vorteile und Einzelheiten der Erfindung werden anhand einer schematischen Figur in einem Ausführungsbeispiel der thermischen Abfallbehandlung näher beschrieben.

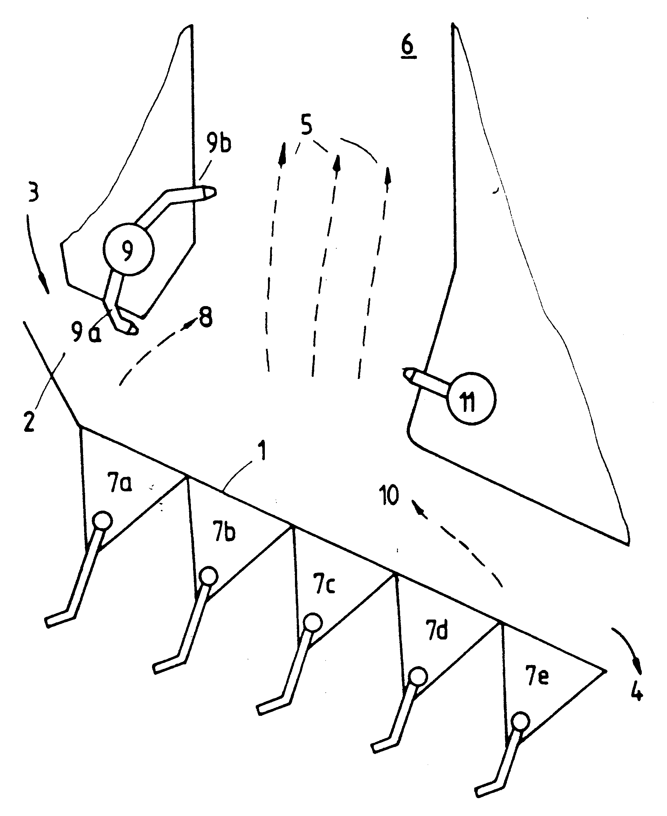

In der Figur ist ein Ausschnitt aus einem Prinzipaufbau einer Rostfeuerung, nur stark vereinfacht, dargestellt. Am vorderen (oberen) Ende eines geneigt angeordneten Rostes 1 ist ein Eintragsschacht 2 zum Beschicken der Verbrennungsanlage mit Abfall 3 (z. B. Hausmüll oder Gewerbemüll) vorgesehen. Der Abfall 3 wird im Verlauf des Verbrennungsprozesses an das hintere (untere) Ende des Rostes 1 bewegt. Dort fällt aus dem Abfall 3 entstandene Schlacke 4 in einen in der Figur nicht dargestellten Entschlacker. Die bei der Verbrennung entstehenden Abgase und die Stäube ziehen in einem Abgasstrom 5 über einen Feuerraum 6 ab und werden daran anschließend einer Nachbehandlung (Rauchgaswäsche usw.) unterzogen.

Dem auf dem Rost 1 befindlichen Abfall 3 wird Primärverbrennungsluft über sogenannten Unterwindzonen 7a - 7e mittels in der Figur nicht dargestellter Gebläse zugeführt. Der Abfall im Bereich der Unterwindzonen 7a bis 7c befindet sich in der Verbrennungszone; der Abfall im Bereich der Unterwindzonen 7d und 7e befindet sich in der Ausbrandzone. Um mit geringem Primärverbrennungsluftdurchsatz eine möglichst vollständige Verbrennung des Abfalls zu erreichen, weist die Primärverbrennungsluft, die den vorderen Unterwindzonen 7a - 7c und den zugehörigen Rostzonen und damit den dort ablaufenden Prozessen zugeführt wird, einen gegenüber der Umgebungsluft erhöhten Sauerstoffanteil auf, was durch Anreicherung von Umgebungsluft mit Sauerstoff erreicht wird. Dies hat im Vergleich zur Zufuhr von reiner Umgebungsluft den Vorteil, daß die Verbrennung des Abfalles bei hohen Temperaturen und längeren Gasverweilzeiten und somit unter weitgehend vollständigem Ausbrand erfolgt. Darüber hinaus ist eine geringere Menge an zuzuführender Primärverbrennungsluft notwendig, wodurch sich einerseits die Abgasmenge verringert und andererseits die Strömungsgeschwindigkeit der Gase kleiner wird. Es kann daher das Bauvolumen der Verbrennungsanlage kleiner gehalten werden. Durch die geringere Strömungsgeschwindigkeit der Gase werden weniger Stäube aus dem Abfall von den Gasen mitgerissen, was die Emissionswerte, insbesondere der PCDD/PCDF-Emissionen verbessert.

Unmittelbar am Ende der Unterwindzone 7c beginnt die Ausbrandzone und setzt sich in den Unterwindzonen 7d und 7e fort, in der der Sauerstoffbedarf der in dieser Zone stattfindenden Restverbrennung erheblich verringert ist. In diesen letztgenannten Unterwindzonen weist die Primärverbrennungsluft einen gegenüber der Umgebungsluft verringerten Sauerstoffanteil auf, was durch Anreicherung, also gewissermaßen Verdünnung von Umgebungsluft mit gasförmigen Stickstoff oder einem anderen inerten Gas oder Gasgemisch geschieht. Zweckmäßigerweise reicht der Restsauerstoff in dieser Zone dazu aus, um eine vollständige Restverbrennung durchführen zu können. Es wird verhindert, weil nicht vorhanden, daß größere Mengen an überschüßigem Sauerstoff aus der Restverbrennung sich mit dem heißen Abgasstrom aus der Verbrennungszone vermischen und es dort zu einer unkontrollierten Sekundärverbrennung mit unkontrollierter Emission von Schadstoffen kommt.

Sowohl die Zufuhr der Menge an Primärverbrennungsluft zu den einzelnen Unterwindzonen als auch die Anreicherung der Primärverbrennungsluft mit Sauerstoff bzw. Stickstoff ist individuell regelbar. Dies geschieht dadurch, daß die Verbrennungsintensität oberhalb der einzelnen Unterwindzonen auf geeignete Weise überwacht wird, z. B. durch Infrarotkameras oder Netze von Thermoelementen, und in Abhängigkeit dieser Verbrennungsintensität der Sauerstoffgehalt in der Primärverbrennungsluft und gegebenenfalls deren Menge geregelt wird. Darüber hinaus ist es auch möglich, weitaus mehr Unterwindzonen vorzusehen, um eine feinere Anpassung der Primärverbrennungsluft an die Erfordernisse des Verbrennungsprozesses (Sauerstoffbedarfsprofil) und damit eine weiter verbesserte Kontrolle des Verbrennungsablaufs zu erreichen.

Nicht nur die Abfälle werden einer Verbrennung, nämlich der sogenannten Primärverbrennung unterzogen, sondern auch die entstandenen Abgase. Diese sogenannte Sekundärverbrennung erfolgt unter Zufuhr von Verbrennungsluft zum Abgasstrom mittels einer regelbaren Sekundärluftzuführung. Dabei wird die sekundäre Verbrennungsluft im Bereich von dominanten Verbrennungsvorgängen mit Sauerstoff angereichert zugeführt, um eine gute und vollständige Verbrennung zu erreichen. Die Verbrennungsvorgänge erfolgen am Eingang der Verbrennungszone (Schwelgasausbrand), wo unverbrannter Abfall 3 infolge Wärmezufuhr aus der Verbrennungszone Scwelgase 8 bildet, und im Feuerraum 6 (Rauchgasausbrand), in dem der Abgasstrom 5 geführt ist. Oberhalb des Rostes 1 ist daher eine erste Sekundärluftzuführung 9 vorgesehen, durch die über Kanäle 9a und 9b Verbrennungsluft mit erhöhtem Sauerstoffanteil in Richtung der Schwelgase 8 und des Abgasstromes 5 eingedüst wird.

Im Bereich von dominanten Durchmischungsvorgängen wird Verbrennungsluft mit verringertem Sauerstoffanteil, in diesem Beispiel mit erhöhtem Stickstoffanteil zugeführt, um einer unkontrollierten Sekundärverbrennung beim Durchmischen vorzubeugen. Ein solcher Bereich liegt beim Aufeinandertreffen von Abgas 10 aus der Ausbrandzone auf den Abgasstrom 5 aus der Verbrennungszone (Rauchgasvermischung). Es ist dort daher eine zweite Sekundärluftzuführung 11 vorgesehen, durch die Verbrennungsluft mit verringertem Sauerstoff bzw. erhöhtem Stickstoffanteil eingedüst wird.

Auch die Sekundärluft ist bezüglich Menge und Gehalt an Sauerstoff bzw. Stickstoff regelbar.

Durch das erfindungsgemäße Verfahren wird bei reduziertem Rauchgasvolumenstrom die Kontrolle des Verbrennungsablaufes und der Ausbrand in Schlacke und Rauchgas verbessert. Hieraus resultiert eine Verringerung der Schadgasemissionen und des Staubaustrags. Auch alle der Verbrennung nachgeschalteten abgasseitigen Anlagen könne deshalb und wegen der geringeren Abgasmenge kleiner dimensioniert werden Darüber hinaus können bereits bestehende Verbrennungsanlagen mit nur geringem Aufwand nachgerüstet werden.

## Patentansprüche

1. Verbrennungsverfahren, bei dem Brennstoff auf einem Feuerungsrost kontinuierlich zugeführt, unter Zufuhr von Primärverbrennungsluft verbrannt und mit fortschreitender Verbrennung weiterbefördert wird und bei dem oberhalb des Feuerungsrostes das Abgas unter Zufuhr von Sekundärverbrennungsluft verbrannt wird, wobei die Verbrennungsluft sowohl hinsichtlich der Menge als auch hinsichtlich Ihrer Zusammensetzung in Abhängigkeit vom Verbrennungsort und der Verbrennungsintensität variiert wird, **dadurch gekennzeichnet, daß** durch die Zuführung von mit Sauerstoff angereicherter Primärverbrennungsluft und/oder Sekundärverbrennungsluft und damit durch Erhöhung des Sauerstoffgehaltes über denjenigen der Umgebungsluft bzw. durch Zuführung von einem inerten Gas oder einem inerten Gasgemisch zur Primärverbrennungsluft und/oder Sekundärverbrennungsluft und damit durch Absenken des Sauerstoffgehalts unter denjenigen der Umgebungsluft der für eine vollständige Verbrennung notwendige Sauerstoff örtlich beigestellt wird.

2. Verbrennungsverfahren nach Anspruch 1, dadurch gekennzeichnet, daß der für die Primärverbrennung und/oder Sekundärverbrennung notwendige Sauerstoff diejenige Sauerstoffmenge umfaßt, die zur vollständigen Verbrennung gebraucht wird zzgl. einer willkürlich vorzugebenden Restmenge.

3. Verbrennungsverfahren nach Anspruch 1 oder 2, dadurch gekennzeichnet, daß als inertes Gas Stickstoff verwendet wird.

4. Verfahren nach einem der Ansprüche 1 bis 3, dadurch gekennzeichnet, daß der Sauerstoff und das inerte Gas oder Gasgemisch bzw. der Stickstoff in einer Luftzerlegungsanlage gewonnen wird.

5. Verbrennungsverfahren nach einem der vorangegangenen Ansprüche, bei dem der Brennstoff kontinuierlich auf einem Feuerungsrost zugeführt wird, dadurch gekennzeichnet, daß der Brennstoff durch eine Verbrennungszone und eine daran anschließende Ausbrandzone transportiert wird, wobei in der Verbrennungszone die Primärverbrennungsluft mit erhöhtem Sauerstoffanteil über demjenigen der Umgebungsluft und in der Ausbrandzone die Primärverbrennungsluft mit verringertem Sauerstoffanteil unter demjenigen der Umgebungsluft zugeführt wird.

6. Verbrennungsverfahren nach Anspruch 5, bei dem das Abgas einer Sekundärverbrennung unter Zufuhr von Sekundärverbrennungsluft unterzogen wird, dadurch gekennzeichnet, daß den Abgasen Sekundärverbrennungsluft mit erhöhtem Sauerstoffanteil über demjenigen der Umgebungsluft zugeführt wird.

7. Verbrennungsverfahren nach Anspruch 5, bei dem das Abgas einer Durchmischung unter Zufuhr von Sekundärverbrennungsluft unterzogen wird, dadurch gekennzeichnet, daß den Abgasen Sekundärverbrennungsluft mit verringertem Sauerstoffanteil unter demjenigen der Umgebungsluft zugeführt wird.

8. Verbrennungsverfahren nach Anspruch 5, dadurch gekennzeichnet, daß in denjenigen Bereichen des Abgasstromes, in denen eine zur Sekundärverbrennung unzureichende Menge an Sauerstoff vorhanden ist, Sekundärverbrennungsluft mit erhöhtem Sauerstoffanteil zugeführt wird und daß in denjenigen Bereichen des Abgasstromes, in denen eine inhomogene Abgaszusammensetzung vorliegt und eine zur Sekundärverbrennung ausreichende Menge an Sauerstoff vorhanden ist, Sekundärverbrennungsluft mit verringertem Sauerstoffanteil zugeführt wird.

9. Verbrennungsverfahren nach einem der vorangegangenen Ansprüche, dadurch gekennzeichnet, daß der Anteil von Sauerstoff bzw. Stickstoff in der Primär- und/oder Sekundärverbrennungsluft und/oder die Menge an Primär- und/oder Sekundärverbrennungsluft in Abhängigkeit von der Verbrennungsintensität geregelt wird.

10. Anwendung eines Verbrennungsverfahrens nach einem der Ansprüche 1 bis 9 auf die thermische Abfallbehandlung.

## Claims

1. Combustion method in which fuel is continuously fed onto a firing grate, with supply of primary combustion air, burnt and further transported with advancing combustion, and in which, above the firing grate, the off-gas is burnt with supply of secondary combustion air, the combustion air being varied both with respect to rate and with respect to its composition depending on the combustion site and the combustion intensity, **characterized in that** the oxygen necessary for complete combustion is made available in a localized manner by the supply of oxygen-enriched primary combustion air and/or secondary combustion air and thus by increasing the oxygen content above that of the surrounding air and by supplying an inert gas or an inert gas mixture to the primary combustion air and/or secondary combustion air and thus by decreasing the oxygen content below that of the surrounding air.

2. Combustion method according to Claim 1, characterized in that the oxygen necessary for the primary combustion and/or secondary combustion includes that amount of oxygen which is necessary for the complete combustion plus a residual amount to be determined arbitrarily.

3. Combustion method according to Claim 1 or 2, characterized in that the inert gas used is nitrogen.

4. Method according to one of Claims 1 to 3, characterized in that the oxygen and the inert gas or gas mixture or the nitrogen are produced in an air fractionation plant.

5. Combustion method according to one of the preceding Claims, in which the fuel [lacuna] continuously supplied on a firing grate, characterized in that the fuel is transported through a combustion zone and a subsequent exhaustive combustion zone, where the primary combustion air having an elevated oxygen content above that of the surrounding air is supplied in the combustion zone and the primary combustion air having a reduced oxygen content below that of the surrounding air is supplied in the exhaustive combustion zone.

6. Combustion method according to Claim 5, in which the off-gas is subjected to a secondary combustion with supply of secondary combustion air, characterized in that secondary combustion air having an elevated oxygen content above that of the surrounding air is supplied to the off-gases.

7. Combustion method according to Claim 5, in which the off-gas is subjected to mixing with supply of secondary combustion air, characterized in that secondary combustion air having a reduced oxygen content below that of the surrounding air is supplied to the off-gases.

8. Combustion method according to Claim 5, characterized in that in those regions of the off-gas stream in which an insufficient amount of oxygen is present for the secondary combustion, secondary combustion air having an elevated oxygen content is supplied and in that in those regions of the off-gas stream in which an inhomogeneous off-gas composition is present and an amount of oxygen sufficient for secondary combustion is present, secondary combustion air having a reduced oxygen content is supplied.

9. Combustion method according to one of the preceding Claims, characterized in that the content of oxygen or nitrogen in the primary and/or secondary combustion air and/or the rate of primary and/or secondary combustion air is controlled in dependence of the combustion intensity.

10. Application to thermal waste treatment of a combustion method according to one of Claims 1 to 9.

## Revendications

1. Procédé de combustion au cours duquel le combustible est amené continuellement sur une grille d'une installation de chauffe, est brûlé par adduction d'air de combustion primaire et est réexpédié avec combustion progressive et dans lequel le gaz résiduaire est brûlé en amont de la grille d'installation de chauffe par adduction d'air de combustion secondaire, où l'air de combustion est varié non seulement en ce qui concerne sa quantité, mais aussi en ce qui concerne sa composition, en fonction du lieu de combustion et de l'intensité de combustion, caractérisé en ce que, par adduction d'air de combustion primaire et/ou d'air de combustion secondaire enrichi en oxygène et ainsi, par augmentation de la teneur en oxygène au-dessus de celle de l'air ambiant et respectivement par adduction d'un gaz inerte ou d'un mélange de gaz inerte à l'air de combustion primaire et/ou à l'air de combustion secondaire et ainsi, par abaissement de la teneur en oxygène au-dessous de celle de l'air ambiant, l'oxygène nécessaire à une combustion complète est localement procuré.

2. Procédé de combustion suivant la revendication 1, caractérisé en ce que l'oxygène nécessaire à la combustion primaire et/ou à la combustion secondaire comprend la quantité d'oxygène qui est nécessaire à une combustion complète correspondant à une quantité restante arbitrairement déterminée.

3. Procédé de combustion suivant la revendication 1 ou 2, caractérisé en ce que l'on utilise de l'azote comme gaz inerte.

4. Procédé suivant l'une quelconque des revendications 1 à 3, caractérisé en ce que l'oxygène et le gaz ou mélange de gaz inerte et respectivement l'azote est produit dans un dispositif d'analyse d'air.

5. Procédé de combustion suivant l'une quelconque des revendications précédentes, dans lequel le combustible est amené continuellement sur une grille d'une installation de chauffe, caractérisé en ce que le combustible est transporté dans une zone de combustion et ensuite une zone d'achèvement, où, dans la zone de combustion, l'air de combustion primaire est amené avec une proportion en oxygène augmentée au-dessus de celle de l'air ambiant, et dans la zone d'achèvement, l'air de combustion primaire est amené avec une proportion en oxygène diminuée au-dessous de celle de l'air ambiant.

6. Procédé de combustion suivant la revendication 5, dans lequel le gaz résiduaire est soumis à une combustion secondaire par adduction d'air de combustion secondaire, caractérisé en ce que l'air de combustion secondaire du gaz résiduaire est amené avec une proportion en oxygène augmentée au-dessus de celle de l'air ambiant.

7. Procédé de combustion suivant la revendication 5, dans lequel le gaz résiduaire est soumis à un mélange par adduction d'air de adduction secondaire, caractérisé en ce que l'air de combustion secondaire du gaz résiduaire est amené avec une proportion en oxygène diminuée au-dessous de celle de l'air ambiant.

8. Procédé de combustion suivant la revendication 5, caractérisé en ce que, dans le domaine du courant de gaz résiduaire dans lequel une quantité insuffisante en oxygène pour la combustion secondaire est disponible, on amène de l'air de combustion secondaire avec une proportion en oxygène augmentée et en ce que dans le domaine du courant de gaz résiduaire dans lequel il existe une composition inhomogène du gaz résiduaire et une quantité suffisante d'oxygène pour la combustion secondaire est disponible, on amène de l'air de combustion secondaire avec une proportion en oxygène diminuée.

9. Procédé de combustion suivant l'une quelconque des revendications précédentes, caractérisé en ce que la proportion en oxygène et respectivement en azote dans l'air de combustion primaire et/ou secondaire et/ou la quantité d'air de combustion primaire et/ou secondaire est réglée en fonction de l'intensité de combustion.

10. Utilisation du procédé de combustion suivant l'une quelconque des revendications 1 à 9, pour le traitement thermique des déchets.
